(19) Europäisches Patentamt
European Patent Office
Office européen des brevets

(11) **EP 4 438 684 A1**

(12) **EUROPÄISCHE PATENTANMELDUNG**

(43) Veröffentlichungstag:
02.10.2024  Patentblatt 2024/40

(21) Anmeldenummer: 23165580.4

(22) Anmeldetag: 30.03.2023

(51) Internationale Patentklassifikation (IPC):
**C09D 5/02** (2006.01)    **C09D 7/61** (2018.01)

(52) Gemeinsame Patentklassifikation (CPC):
**C09D 5/024; C09D 7/61; C09D 133/04;** C08K 3/26;
C08K 3/346; C08K 7/00

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(71) Anmelder: **STO SE & Co. KGaA**
**79780 Stühlingen (DE)**

(72) Erfinder:
• **VAN LEEUWEN, Jack**
**4800 Zofingen (CH)**

• **WEH, Walter**
**78647 Trossingen (DE)**
• **BURGETH, Gerald**
**79805 Eggingen (DE)**

(74) Vertreter: **Gottschalk, Matthias**
**Gottschalk Maiwald**
**Patentanwalts- und Rechtsanwalts- (Schweiz)**
**GmbH**
**Florastrasse 14**
**8008 Zürich (CH)**

Bemerkungen:
Geänderte Patentansprüche gemäss Regel 137(2)
EPÜ.

(54) **ZUSAMMENSETZUNG ZUR AUSBILDUNG EINER BESCHICHTUNG, BESCHICHTUNG**

(57)    Die Erfindung betrifft eine Zusammensetzung zur Ausbildung einer Beschichtung, insbesondere einer Farbbeschichtung für den Innenbereich, enthaltend
- mindestens ein Polymerbindemittel,
- eine Füllstoffkombination,
- Farb- und/oder Weißpigmente und
- Wasser,
wobei die Füllstoffkombination (a) mindestens zwei Füllstoffe aufweist, die sich in Bezug auf ihre Morphologie unterscheiden, und (b) eine Gesamt-Ölzahl nach DIN EN ISO 787-5 über 40, vorzugsweise über 50, weiterhin vorzugsweise über 55, aufweist, und wobei die Pigment-Volumen-Konzentration (PVK) der Zusammensetzung kleiner 50%, vorzugsweise kleiner 44%, weiterhin vorzugsweise kleiner 36% ist.

Die Erfindung betrifft ferner eine aus einer erfindungsgemäßen Zusammensetzung ausgebildete Beschichtung, insbesondere Farbbeschichtung.

**Beschreibung**

Die Erfindung betrifft eine Zusammensetzung zur Ausbildung einer Beschichtung, insbesondere einer Farbbeschichtung für den Innenbereich. Darüber hinaus betrifft die Erfindung eine aus einer erfindungsgemäßen Zusammensetzung ausgebildete Beschichtung.

Stand der Technik

Eine Beschichtung, insbesondere eine Farbbeschichtung für den Innenbereich, wird als widerstandsfähig bezeichnet, wenn sie verschmutzungsresistent ist und eine hohe Nassabriebfestigkeit aufweist. Um dies zu erreichen, kann eine bindemittelreiche Zusammensetzung zur Ausbildung der Beschichtung gewählt werden, wobei das Bindemittel in der Regel ein Polymerbindemittel ist. In einer bindemittelreichen Zusammensetzung sind die ferner enthaltenen Füllstoffe vollständig vom Bindemittel umschlossen und damit fest eingebunden. Eine aus der Zusammensetzung ausgebildete Beschichtung ist demzufolge gegenüber mechanischer Beanspruchung besonders stabil. Insbesondere ist die Beschichtung abwischbar und demzufolge leicht zu reinigen. Der hohe Bindemittelanteil führt ferner dazu, dass Schmutz, insbesondere in Form von Flüssigkeiten, nicht so gut eindringen kann, so dass die Beschichtung länger schön bleibt.

Als nachteilig erweist sich jedoch, dass Beschichtungen aus bindemittelreichen Zusammensetzungen einen hohen Glanzgrad aufweisen, so dass zur Erzielung einer matt wirkenden Beschichtung Mattierungsmittel zugegeben werden müssen. Der Anteil der notwendigen Mattierungsmittel steigt mit dem Anteil des Bindemittels. Mit zunehmendem Anteil an Mattierungsmittel nimmt jedoch auch die Viskosität der Zusammensetzung zu, so dass sich diese nicht mehr so gut verarbeiten lässt. Hinzu kommt, dass eine Beschichtung mit einem hohen Anteil an Bindemittel und damit auch Mattierungsmittel zu dem sogenannten "Schreibeffekt" neigt. Dieser Effekt tritt vorrangig, aber nicht nur, bei matten Beschichtungen auf und wird dadurch verursacht, dass die Farbpigmente nicht vollständig vom Bindemittel umhüllt und damit nicht geschützt sind. Wird die Oberfläche mechanisch belastet, werden die Farbpigmente verschoben oder gar beschädigt und es entstehen helle, glänzende Abriebspuren. Bei einer intensiv getönten Beschichtung wird dieser Effekt besonders deutlich sichtbar. Der Zugabe von Mattierungsmittel sind demnach Grenzen gesetzt.

Zur Ausbildung von Farbbeschichtungen im Innenbereich mit geringem Glanzgrad werden daher häufig bindemittelarme Zusammensetzungen verwendet. Auf die Zugabe von Mattierungsmittel kann dann in der Regel verzichtet werden. Allerdings erweisen sich Beschichtungen aus bindemittelarmen Zusammensetzungen als weniger widerstandfähig, schmutzanfälliger und häufig als nicht abwaschbar.

Das Erreichen einer Beschichtung, insbesondere einer Farbeschichtung, die besonders widerstandsfähig und verschmutzungsresistent ist, aber zugleich einen niedrigen Glanzgrad aufweist, ohne Schreibeffekt-Neigung, stellt demnach einen Zielkonflikt dar, den es zu lösen gilt. Darüber hinaus soll die "Scuff-Resistance" erhöht aufweisen. Unter der "Scuff-Resistance" ist die Widerstandsfähigkeit einer Beschichtung, insbesondere einer Beschichtung mit heller Farbgebung, gegenüber der Ausbildung dunkler Striemen zu verstehen. Geläufig sind beispielsweise dunkle Striemen auf Oberflächen, die durch dunkle Gummisohlen verursacht werden. Grund für die Striemenbildung sind an der Oberfläche offenliegende Füllstoffe bzw. Pigmente, die der Oberfläche eine gewisse Rauheit verleihen. Es gilt daher die Oberfläche zu glätten, ohne dass sich der Glanzgrad der Oberfläche erhöht.

Mit dieser Aufgabe bzw. Aufgaben ist die vorliegende Erfindung befasst. Zur Lösung der Aufgabe bzw. Aufgaben wird die Zusammensetzung mit den Merkmalen des Anspruchs 1 vorgeschlagen. Vorteilhafte Weiterbildungen der Erfindung sind den Unteransprüchen zu entnehmen. Darüber hinaus wird eine aus einer erfindungsgemäßen Zusammensetzung ausgebildete Beschichtung angegeben.

Offenbarung der Erfindung

Vorgeschlagen wird eine Zusammensetzung zur Ausbildung einer Beschichtung, insbesondere einer Farbeschichtung für den Innenbereich. Diese enthält:

- mindestens ein Polymerbindemittel,
- eine Füllstoffkombination,
- Farb- und/oder Weißpigmente und
- Wasser,

wobei die Füllstoffkombination (a) mindestens zwei Füllstoffe aufweist, die sich in Bezug auf ihre Morphologie unterscheiden, und (b) eine Gesamt-Ölzahl nach DIN EN ISO 787-5 über 40, vorzugsweise über 50, weiterhin vorzugsweise über 55, aufweist, und wobei die Pigment-Volumen-Konzentration (PVK) der Zusammensetzung kleiner 50%, vorzugsweise kleiner 44%, weiterhin vorzugsweise kleiner 36% ist.

Die vorgeschlagene Zusammensetzung enthält eine Füllstoffkombination mit mindestens zwei Füllstoffen, die sich in Bezug auf ihre Morphologie unterscheiden. Das heißt, dass morphologisch divergente Füllstoffe verwendet werden. Je unterschiedlicher und unregelmäßiger die Form der Füllstoffe ist, desto größer sind die zwischen den Füllstoffen verbleibenden Lücken und Hohlräume. Das Ziel ist das Erreichen einer möglichst lückenhaften Packung der Füllstoffe in der Zusammensetzung, um die Lücken mit Bindemittel füllen zu können. Das heißt, dass der Bindemittelanteil erhöht werden kann. Der erhöhte Bindemittelanteil steigert die Widerstandsfähigkeit einer aus der Zusammensetzung ausgebildeten Beschichtung, und zwar ohne, dass zugleich der Glanzgrad steigt. Denn das Bindemittel reichert sich nicht an der Oberfläche der Beschichtung an, sondern setzt sich in die Lücken bzw. Hohlräume zwischen den Füllstoffpartikeln. Mit anderen Worten, es "versteckt" sich in den Lücken und Hohlräumen.

Der eingangs beschriebene Zielkonflikt wird demnach insbesondere dadurch gelöst, dass die vorgeschlagene Zusammensetzung eine Füllstoffkombination aus mindestens zwei morphologisch divergenten Füllstoffen enthält, so dass große Lücken zwischen den Füllstoffen verbleiben, die mit Bindemittel gefüllt werden können.

Die Morphologie der in der Zusammensetzung enthaltenen Füllstoffe bestimmt die Ölzahl eines einzelnen Füllstoffs sowie die Gesamt-Ölzahl aller enthaltenen Füllstoffe. Denn die Ölzahl eines Füllstoffs enthält Informationen über das Oberflächen-Volumenverhältnis und damit über die Morphologie der Füllstoffpartikel. Im Fachlexikon, "Putze und Beschichtungen", wird die Ölzahl wie folgt beschrieben:

Nach DIN EN ISO 787-5 versteht man unter der Ölzahl diejenige Menge an tropfenweise zugegebenem Lackleinöl einer festgelegten Säurezahl, die 100 g Pigment oder Füllstoff beim Kneten mit einem Spatel bis zum Erreichen einer zusammenhängenden, kittartig-steifen Paste absorbiert ("Netzpunkt").

Die Ölzahl von Pigmenten oder Füllstoffen ist eine in der Lack- und Farbenindustrie häufig verwendete Kenngröße. Sie stellt ein Maß für den Bindemittelbedarf des Pigments oder Füllstoffs dar. Je höher die Ölzahl ist, desto größer ist der Bindemittelbedarf. Damit hat die Ölzahl Einfluss auf diverse Eigenschaften von Beschichtungsfilmen, beispielsweise die Nassabriebfestigkeit und die Elastizität eines Beschichtungsfilms (siehe auch DIN EN ISO 4618).

Eine weitere relevante Kenngröße stellt die Pigment-Volumen-Konzentration PVK dar. Die PVK bezeichnet das Verhältnis des Volumens der enthaltenen Pigmente und Füllstoffe zum Gesamtvolumen an nichtflüchtigen Bestandteilen, in der Regel Pigmente, Füllstoffe und Bindemittel. Sie ist demnach eine wesentliche Größe zur Charakterisierung des Volumenverhältnisses von Pigment und Füllstoff zum Bindemittel. Je niedriger die PVK ist, desto höher ist in der Regel der Bindemittelanteil. Für die Bestimmung der PVK kann Rückgriff auf die DIN EN ISO 4618:2015-01 genommen werden. Zur Berechnung der PVK kann die folgende Formel verwendet werden:

$$\text{PVK } [\%] = \left( \sum V_{\text{Pigmente}} + \sum V_{\text{Füllstoffe}} / \sum V_{\text{Pigmente}} + \sum V_{\text{Füllstoffe}} + \sum V_{\text{Bindemittel}} \right) \text{x } 100$$

Die beanspruchte Zusammensetzung weist eine PVK kleiner 50%, vorzugsweise kleiner 44%, weiterhin vorzugsweise kleiner 36% auf. Eine PKV von 50%, insbesondere von 36%, ist für eine Farbbeschichtung, insbesondere eine Innenfarbe, sehr niedrig. Das heißt, dass der Bindemittelanteil hoch ist. Dennoch ist eine aus der angegebenen Zusammensetzung ausgebildete Beschichtung nicht glänzend, was darauf zurückzuführen ist, dass sich das Bindemittel in den Lücken zwischen den Füllstoffen ansammelt, wo es dann seine ganze Bindekraft entfaltet.

In diesem Zusammenhang kommt die kritische Pigment-Volumen-Konzentration KPVK ins Spiel. In der DIN EN ISO 4618:2015-01 wird die KPVK als ein bestimmter Wert der PVK definiert, bei dem die Hohlräume zwischen den sich berührenden Feststoffpartikel einer Beschichtung gerade noch mit Bindemittel gefüllt sind. Oberhalb der KPVK (überkritischer Bereich) sind demnach die Hohlräume nicht vollständig mit Bindemittel gefüllt. Unterhalb der KPVK (unterkritischer Bereich), sind alle Hohlräume vollständig mit Bindemittel gefüllt.

Vorliegend wird eine bindemittelreiche, unterkritische Formulierung angestrebt. Das heißt, dass alle Hohlräume mit Bindemittel gefüllt und die Füllstoffe im Bindemittel fest eingebunden sind. Dadurch steigen Widerstandsfähigkeit und Abriebfestigkeit einer aus der Zusammensetzung hergestellten Beschichtung. Zudem befindet sich wenig Bindemittel an der Beschichtungsoberfläche, so dass der Glanzgrad gering ist.

Denn wie bereits erwähnt ist für den Glanzgrad einer Beschichtung in der Regel das Polymerbindemittel an der Oberfläche der Beschichtung verantwortlich. Obwohl der Bindemittelanteil in der vorgeschlagenen Zusammensetzung hoch ist, reichert sich das Bindemittel nicht an der Oberfläche der Beschichtung an, sondern "versteckt" sich in den Lücken zwischen den Füllstoffen. An der Oberfläche der Beschichtung bleibt demnach eine Mikrostruktur erhalten, durch die einfallendes Licht gestreut wird, so dass die Oberfläche matt erscheint.

Da der hohe Bindemittelanteil die Füllstoffpartikel zusammenhält, steigt die Abriebfestigkeit einer aus einer erfindungsgemäßen Zusammensetzung ausgebildeten Beschichtung. Das heißt, dass die Beschichtung, anders als herkömmliche matte Farbeschichtungen, nicht zu dem eingangs erwähnten Schreibeffekt neigt.

Bevorzugt enthält die Füllstoffkombination der vorgeschlagenen Zusammensetzung mindestens einen mineralischen, anorganischen Füllstoff, dessen Ölzahl 30-100, vorzugsweise 35-100, weiterhin vorzugsweise 40-100 beträgt. Die Ölzahl eines einzelnen in der Füllstoffkombination enthaltenen Füllstoffs kann demnach unter der Gesamt-Ölzahl der Füllstoffkombination liegen. Um die Gesamt-Ölzahl zu erreichen, muss dann der Füllstoff mit einem Füllstoff kombiniert werden, dessen Ölzahl deutlich über der angegebenen Gesamt-Ölzahl liegt. Denn die Gesamt-Ölzahl aller Füllstoffe (FS) berechnet sich wie folgt:

$$\text{(prozentualer Anteil FS1 * ÖZ FS1)} + \text{(prozentualer Anteil FS2 * ÖZ FS2)} +$$
$$\text{(prozentualer Anteil FSn * ÖZ FSn)} = \text{Gesamt-ÖZ}$$

Alternativ kann die Gesamt-Ölzahl mit einer akzeptablen Fehlertoleranz experimentell bestimmt werden, indem die Ölzahl der Füllstoffkombination bestimmt wird.

Die Ölzahl eines Füllstoffs korreliert mit der spezifischen Oberfläche der einzelnen Füllstoffpartikel. Die spezifische Oberfläche wiederum wird durch die Größe und die Morphologie der Füllstoffpartikel bestimmt. Füllstoffe aus sehr kleinen Partikeln, mit lamellaren Partikelformen und/oder porösen Oberflächen weisen eine größere spezifische Oberfläche und damit eine höhere Ölzahl auf als Füllstoffe aus größeren Partikeln, mit nodularer, das heißt rundlich-kompakter Partikelform.

Die hohe Gesamt-Ölzahl der Füllstoffkombination der vorgeschlagenen Zusammensetzung lässt demnach darauf schließen, dass kleine, lamellare und/oder poröse Füllstoffpartikel enthalten sind. Diese fördern die Ausbildung von Lücken bzw. Hohlräumen zwischen den Füllstoffen, in denen sich Bindemittel ansammeln kann.

Des Weiteren bevorzugt enthält die Füllstoffkombination mindestens einen mineralischen, anorganischen Füllstoff, dessen mittlere Partikelgröße D50 1-30 $\mu$m, vorzugsweise 2-25 $\mu$m, weiterhin vorzugsweise 3-20 $\mu$m, beträgt.

Die mittlere Partikelgröße D50, auch D50-Wert oder Medianwert genannt, gibt die mittlere Partikelgröße eines Füllstoffs an, so dass der Anteil der Partikel, die größer als der D50-Wert sind, gleich dem Anteil der Partikel ist, die kleiner als der D50-Wert sind. Die Bestimmung dieser Werte erfolgt bevorzugt nach DIN ISO 9276-1:2004-09 (Darstellung der Ergebnisse von Partikelgrößenanalysen - Teil 1: grafische Darstellung) und ISO 9276-2:2014-05 (Darstellung der Ergebnisse von Partikelgrößenanalysen - Teil 2: Berechnungen von mittleren Partikelgrößen/- durchmessern und Momenten aus Partikelgrößenverteilungen). Dabei kann der Mastersizer 3000 der Firma Malvern Instruments Limited als Instrument zur Größenbestimmung eingesetzt werden. In der Regel können diese Werte aber auch einfach einem technischen Datenblatt entnommen werden.

Bei dem mindestens einen Füllstoff, dessen Ölzahl 30-100, vorzugsweise 35-100, weiterhin vorzugsweise 40-100, beträgt, und dem mindestens einen Füllstoff, dessen mittlere Partikelgröße D50 1-30 $\mu$m, vorzugsweise 2-25 $\mu$m, weiterhin vorzugsweise 3-20 $\mu$m, beträgt, kann es sich um ein und denselben mineralischen, anorganischen Füllstoff handeln. Das heißt, dass mindestens ein weiterer Füllstoff enthalten sein muss, dessen Ölzahl höher ist, vorzugsweise über 100 liegt, um die geforderte Gesamt-Ölzahl zu erreichen.

In Weiterbildung der Erfindung wird daher vorgeschlagen, dass die Füllstoffkombination mindestens einen mineralischen, anorganischen Füllstoff enthält, dessen Ölzahl über 100 liegt und dessen mittlere Partikelgröße D50 1-30 $\mu$m, vorzugsweise 1-20 $\mu$m, weiterhin vorzugsweise 2-10 $\mu$m beträgt. Das heißt, dass sich der mindestens eine weitere Füllstoff nicht durch die Größe seiner Füllstoffpartikel von dem zuvor erwähnten Füllstoff unterscheidet, sondern durch seine Ölzahl. Das heißt, dass die Morphologie des mindestens einen weiteren Füllstoffs eine andere ist, so dass seine Ölzahl über 100 liegt. Die Ölzahl des mindestens einen weiteren Füllstoffs muss dabei so hoch gewählt werden, dass die Ölzahlen der Füllstoffe in Summe eine Gesamt-Ölzahl > 40 ergeben.

Geeignete mineralische, anorganische Füllstoffe sind insbesondere alle karbonatischen und silikatischen Füllstoffe. Des Weiteren wird daher vorgeschlagen, dass die Füllstoffkombination mindestens einen karbonatischen und/oder silikatischen Füllstoff enthält. Auf die gezielte Zugabe organischer, insbesondere synthetischorganischer, Füllstoffe wird aus ökologischen Gründen verzichtet. Bei den silikatischen Füllstoffen kann es sich beispielsweise um Quarz, Cristobalit, ein Schichtsilikat, Talkum, Kaolin und/oder Glimmer handeln. Geeignete karbonatische Füllstoffe sind beispielsweise Calcit, Marmor und/oder Dolomit.

Bevorzugt enthält die Füllstoffkombination der Zusammensetzung mindestens einen Hartfüllstoff mit einer Mohshärte $\geq$ 5, vorzugsweise $\geq$ 6, sowie mindestens einen Weichfüllstoff mit einer Mohshärte < 5, vorzugsweise < 4. Der mindestens eine Hartfüllstoff weist weiterhin vorzugsweise eine Ölzahl von 30-100 sowie eine mittlere Partikelgröße D50 von 1-30 $\mu$m auf. Das heißt, dass der mindestens eine Hartfüllstoff der Füllstoff der Füllstoffkombination mit der entsprechenden Ölzahl und der mittleren Partikelgröße ist. Der mindestens eine Weichfüllstoff weist vorzugsweise eine Ölzahl über 100 sowie eine mittlere Partikelgröße D50 von 1-30 $\mu$m auf, so dass es sich in diesem Fall bei dem Weichfüllstoff insbesondere um den Füllstoff der Füllstoffkombination mit der entsprechenden Ölzahl und der mittleren Partikelgröße handelt.

Als Füllstoff kann auch ein in der Zusammensetzung enthaltenes Mattierungsmittel angesehen werden, wobei vorzugsweise aus ökologischen Gründen nur mineralische, anorganische Mattierungsmittel verwendet werden. Auf die gezielte Zugabe organischer, polymerer Mattierungsmittel, wie beispielsweise Polyethylenharze, Polypropylenharze, Polymethylharnstoffe oder Wachsadditive, wie Polyethylenwachse, sollte dagegen verzichtet werden.

Da das Ziel eine bindemittelreiche unterkritische Formulierung ist, wird ferner vorgeschlagen, dass in der vorgeschlagenen Zusammensetzung 3-41 Gew.-%, vorzugsweise 3-30 Gew.-%, weiterhin vorzugsweise 4-25 Gew.-% Füllstoffe bezogen auf das Gesamtgewicht der Ausgangsstoffe enthalten sind. Dies schließt alle enthaltenen Füllstoffe mit ein, demzufolge auch etwaige enthaltene mineralische, anorganische Mattierungsmittel. Die Kombination der Füllstoffe muss die geforderte Gesamt-Ölzahl erreichen und darf die angegebene PKV nicht überschreiten. Bevorzugt ist in der vorgeschlagenen Zusammensetzung 10-50 Gew.-%, vorzugsweise 15-40 Gew.-%, weiterhin vorzugsweise 20-35 Gew.-% Polymerbindemittel bezogen auf das Gesamtgewicht der Ausgangsstoffe enthalten. Der Bindemittelanteil führt zu einer bindemittelreichen Zusammensetzung.

Des Weiteren bevorzugt ist das mindestens eine Polymerbindemittel ein Polymerbindemittel auf Basis von Vinylacetat/Ethylen-Copolymeren, Copolymeren auf Basis von Vinylaromaten, insbesondere Styrol, und Acrylaten und/oder Homo- oder Copolymeren auf Basis von Reinacrylaten, insbesondere auf Basis von Styrolacrylatcopolymeren, und/oder Reinacrylate umfassend Homo- oder Copolymere von Acrylaten und/oder Methacrylaten, gegebenenfalls mit Acryl- und/oder Methacrylsäure als Comonomerbaustein. Geeignet sind und bevorzugt verwendet werden auch selbstvernetzende Core Shell-Polymerbindemittel auf Basis von Acrylaten, insbesondere Reinacrylaten. Besonders bevorzugt werden Homo- oder Copolymere auf Basis von Reinacrylaten und/oder auf Basis von Styrolacrylatcopolymeren eingesetzt.

Vorteilhafterweise ist das mindestens eine Polymerbindemittel eine Polymerdispersion mit einem Feststoffanteil von 30-65 Gew.-%, vorzugsweise 40-60 Gew.-%, weiterhin vorzugsweise 40-55 Gew.-% bezogen auf das Gesamtgewicht der Polymerdispersion. Die Verwendung einer Polymerdispersion erleichtert die Herstellung der Zusammensetzung.

Darüber hinaus können in der vorgeschlagenen Zusammensetzung Additive enthalten sein, beispielsweise rheologische Additive, Verdicker, Topf- und Filmkonservierungsmittel, Filmbindehilfsmittel, Biozide, Entschäumer und/oder Fasern. Über die Additive können insbesondere die Verarbeitungseigenschaften der Zusammensetzung gesteuert werden.

Gemäß einer bevorzugten Ausführungsform der Erfindung enthält die vorgeschlagene Zusammensetzung, jeweils bezogen auf das Gesamtgewicht der Ausgangsstoffe:

| | |
|---|---|
| 10-50 Gew.-% | Polymerbindemittel (Feststoffanteil) |
| 1-8 Gew.-% | anorganische Füllstoffe mit einer Ölzahl > 100 |
| 2-40 Gew.-% | karbonatische und/oder silikatische Füllstoffe mit einer Ölzahl zwischen 30 und 100, |
| 0-20 Gew.-% | weitere Füllstoffe |
| 1-25 Gew.-% | Weiß- und/oder Farbpigmente |
| 0,01-5,0 Gew.-% | weitere Additive |
| 10-50 Gew.-% | Wasser |

Die vorgeschlagene Zusammensetzung ist insbesondere zur Ausbildung einer Farbbeschichtung für den Innenbereich geeignet. Gegenüber herkömmlicher Innenfarben weist sie eine hohe Widerstandsfähigkeit und einen geringe Verschmutzungsneigung auf. Darüber hinaus können matte Farbbeschichtungen in intensiven Farben ausgebildet werden, die deutlich weniger zum Schreibeffekt neigen.

Da die Vorteile einer erfindungsgemäßen Zusammensetzung insbesondere bei einer hieraus ausgebildeten Beschichtung zu Tage treten, wird ferner eine Beschichtung, insbesondere eine Farbbeschichtung, aus einer erfindungsgemäßen Zusammensetzung vorgeschlagen.

Die Beschichtung weist bevorzugt eine Nassabriebfestigkeit der Nassabriebklasse 1 auf. Das heißt, dass die Beschichtung abwaschbar ist. Zur Ermittlung der Nassabriebklasse kann auf die Norm DIN EN ISO 11998:2006-10 in Verbindung mit der Norm DIN EN 13300 (November 2002) zurückgegriffen werden.

Ferner bevorzugt weist die Beschichtung einen Glanzgrad < 10 GU, vorzugsweise < 8 GU, weiterhin vorzugsweise ≤ 7 GU, auf. Das heißt, dass die Beschichtung nach der DIN EN 13300 (Ausgabe 11.2002) als "matt" oder "stumpfmatt" eingestuft werden kann. Der Glanzgrad kann nach der DIN EN ISO 2813:2014 (Ausgabedatum 11.2002) bei einem Messwinkel von 85° ermittelt werden.

Die Vorteile einer erfindungsgemäßen Zusammensetzung bzw. einer hieraus ausgebildeten Beschichtung werden nachfolgend anhand eines konkreten Ausführungsbeispiels aufgezeigt. Das Ausführungsbeispiel dient insbesondere der Ausbildung einer Farbbeschichtung für den Innenbereich.

Ausführungsbeispiel

| | |
|---|---|
| 50,0 Gew.-% | Polymerdispersion (Feststoffanteil ca. 50%) |
| 3,0 Gew.-% | anorganischer Feinfüllstoff (Ölzahl > 150, D50-Wert = 6μm |
| 8,0 Gew.-% | karbonatischer Füllstoff (Ölzahl > 40, D50-Wert = 10 μm) |
| 6,0 Gew.-% | silikatischer Füllstoff (Ölzahl > 40, D50-Wert = 12 μm) |
| 10,0 Gew.-% | Weißpigment Rutil |
| 2,0 Gew.-% | weitere Additive (Rheologieaddive, Entschäumer, Konservierungsmittel u.a.) |
| 21,0 Gew.-% | Wasser |
| 100 Gew.-% | |

Zur Herstellung der Zusammensetzung wurden alle Ausgangsstoffe homogen gemischt. Die hergestellte Zusammensetzung wies eine PVK von 30% auf. Die Gesamt-Ölzahl aller enthaltenen Füllstoffe betrug 75.

Die nach dem Ausführungsbeispiel hergestellte Zusammensetzung wurde anschließend mit einem Spaltrakel mit einer Spalthöhe von 300 μm gleichmäßig auf mehrere Prüfkarten aufgetragen und vollständig getrocknet. Die derart hergestellten Beschichtungen wiesen - bestimmt nach DIN EN ISO 2813:2014 (Ausgabedatum 2015-02) und bei einem Messwinkel von 85° - einen Glanzgrad von 7 GU auf. Im Rahmen der Ermittlung der Nassabriebfestigkeit nach DIN EN ISO 11998:2006-10 in Verbindung mit der DIN EN 13300 (November 2002) wurde ein Nassabrieb im Mittel von 4 μm ermittelt (Nassabriebklasse 1). Zur Ermittlung der Verschmutzungsresistenz und der Reinigungsfähigkeit wurden auf die Beschichtungen verschiedene Substanzen aufgebracht, und zwar Rotwein, Ketchup und Kaffee. Nach einer Einwirkzeit von fünf Minuten wurden die Substanzen mit einem feuchten Tuch abgewischt und die Beschichtungen getrocknet. Anschließend wurde der Farbabstand delta E* bestimmt und mit Werten herkömmlicher Innenraumfarben verglichen. Diese wiesen im Vergleich zu den Beschichtungen aus der erfindungsgemäßen Zusammensetzung gemäß dem Ausführungsbeispiel einen deutlich größeren Farbabstand delta E* auf.

Die aus der erfindungsgemäßen Zusammensetzung gemäß dem Ausführungsbeispiel hergestellten Beschichtungen wurden zudem auf ihre Widerstandsfähigkeit gegenüber Schreibeffekt und Striemenbildung (Scuff-Resistance) geprüft. Die Prüfung erfolgte durch optischen Befund, das heißt durch subjektive Beurteilung. Auch hier schnitten die Beschichtungen aus der erfindungsgemäßen Zusammensetzung besser ab als herkömmliche Innenraumfarben.

**Patentansprüche**

1. Zusammensetzung zur Ausbildung einer Beschichtung, insbesondere einer Farbbeschichtung für den Innenbereich, enthaltend

   - mindestens ein Polymerbindemittel,
   - eine Füllstoffkombination,
   - Farb- und/oder Weißpigmente und
   - Wasser,

   wobei die Füllstoffkombination (a) mindestens zwei Füllstoffe aufweist, die sich in Bezug auf ihre Morphologie unterscheiden, und (b) eine Gesamt-Ölzahl nach DIN EN ISO 787-5 über 40, vorzugsweise über 50, weiterhin vorzugsweise über 55, aufweist, und wobei die Pigment-Volumen-Konzentration (PVK) der Zusammensetzung kleiner 50%, vorzugsweise kleiner 44%, weiterhin vorzugsweise kleiner 36% ist.

2. Zusammensetzung nach Anspruch 1,
   **dadurch gekennzeichnet, dass** die Füllstoffkombination mindestens einen mineralischen, anorganischen Füllstoff enthält, dessen Ölzahl 30-100, vorzugsweise 35-100, weiterhin vorzugsweise 40-100 beträgt.

3. Zusammensetzung nach Anspruch 1 oder 2,
   **dadurch gekennzeichnet, dass** die Füllstoffkombination mindestens einen mineralischen, anorganischen Füllstoff enthält, dessen mittlere Partikelgröße D50 1-30 μm, vorzugsweise 2-25 μm, weiterhin vorzugsweise 3-20 μm, beträgt.

4. Zusammensetzung nach einem der vorhergehenden Ansprüche,
**dadurch gekennzeichnet, dass** die Füllstoffkombination mindestens einen mineralischen, anorganischen Füllstoff enthält, dessen Ölzahl über 100 liegt und dessen mittlere Partikelgröße D-50 1-30 $\mu$m, vorzugsweise 1-20 $\mu$m, weiterhin vorzugsweise 2-10 $\mu$m beträgt.

5. Zusammensetzung nach einem der vorhergehenden Ansprüche,
**dadurch gekennzeichnet, dass** die Füllstoffkombination mindestens einen karbonatischen und/oder silikatischen Füllstoff enthält.

6. Zusammensetzung nach einem der vorhergehenden Ansprüche,
**dadurch gekennzeichnet, dass** die Füllstoffkombination mindestens einen Hartfüllstoff mit einer Mohshärte $\geq$ 5, vorzugsweise $\geq$ 6, sowie mindestens einen Weichfüllstoff mit einer Mohshärte < 5, vorzugsweise < 4, enthält.

7. Zusammensetzung nach einem der vorhergehenden Ansprüche,
**dadurch gekennzeichnet, dass** 3-41 Gew.-%, vorzugsweise 3-30 Gew.-%, weiterhin vorzugsweise 4-25 Gew.-% Füllstoffe bezogen auf das Gesamtgewicht der Ausgangsstoffe enthalten sind.

8. Zusammensetzung nach einem der vorhergehenden Ansprüche,
**dadurch gekennzeichnet, dass** 10-50 Gew.-%, vorzugsweise 15-40 Gew.-%, weiterhin vorzugsweise 20-35 Gew.-% Polymerbindemittel bezogen auf das Gesamtgewicht der Ausgangsstoffe enthalten ist.

9. Zusammensetzung nach einem der vorhergehenden Ansprüche,
**dadurch gekennzeichnet, dass** das mindestens eine Polymerbindemittel ein Polymerbindemittel auf Basis von Vinylacetat/Ethylen-Copolymeren, Copolymeren auf Basis von Vinylaromaten, insbesondere Styrol, und Acrylaten und/oder Homo- oder Copolymeren auf Basis von Reinacrylaten, insbesondere auf Basis von Styrolacrylatcopolymeren, und/oder Reinacrylate umfassend Homo- oder Copolymere von Acrylaten und/oder Methacrylaten, gegebenenfalls mit Acryl- und/oder Methacrylsäure als Comonomerbaustein, ist.

10. Zusammensetzung nach einem der vorhergehenden Ansprüche,
**dadurch gekennzeichnet, dass** das mindestens eine Polymerbindemittel eine Polymerdispersion mit einem Feststoffanteil von 30-65 Gew.-%, vorzugsweise 40-60 Gew.-%, weiterhin vorzugsweise 40-55 Gew.-% bezogen auf das Gesamtgewicht der Polymerdispersion ist.

11. Zusammensetzung nach einem der vorhergehenden Ansprüche,
**dadurch gekennzeichnet, dass** Additive enthalten sind, beispielsweise rheologische Additive, Verdicker, Topf- und Filmkonservierungsmittel, Filmbindehilfsmittel, Biozide, Entschäumer und/oder Fasern.

12. Zusammensetzung nach einem der vorhergehenden Ansprüche,
**dadurch gekennzeichnet, dass**

| | |
|---|---|
| 10-50 Gew.-% | Polymerbindemittel (Feststoffanteil) |
| 1-8 Gew.-% | anorganische Füllstoffe mit einer Ölzahl > 100 |
| 2-40 Gew.-% | karbonatische und/oder silikatische Füllstoffe mit einer Ölzahl zwischen 30 und 100, |
| 0-20 Gew.-% | weitere Füllstoffe |
| 1-25 Gew.-% | Weiß- und/oder Farbpigmente |
| 0,01-5,0 Gew.-% | weitere Additive |
| 10-50 Gew.-% | Wasser |

jeweils bezogen auf das Gesamtgewicht der Ausgangsstoffe enthalten sind.

13. Beschichtung, insbesondere Farbbeschichtung, aus einer Zusammensetzung nach einem der vorhergehenden Ansprüche, wobei die Beschichtung eine Nassabriebfestigkeit der Klasse 1 und/oder einen Glanzgrad < 10 GU, vorzugsweise < 8 GU, weiterhin vorzugsweise $\leq$ 7 GU, aufweist.

**Geänderte Patentansprüche gemäss Regel 137(2) EPÜ.**

1. Zusammensetzung zur Ausbildung einer Beschichtung, insbesondere einer Farbbeschichtung für den Innenbereich, enthaltend

    - mindestens ein Polymerbindemittel,
    - eine Füllstoffkombination,
    - Farb- und/oder Weißpigmente und
    - Wasser,

    wobei die Füllstoffkombination (a) mindestens zwei Füllstoffe aufweist, die sich in Bezug auf ihre Morphologie unterscheiden, und (b) eine Gesamt-Ölzahl nach DIN EN ISO 787-5 über 50, vorzugsweise über 55, aufweist, und wobei die Pigment-Volumen-Konzentration (PVK) der Zusammensetzung kleiner 50%, vorzugsweise kleiner 44%, weiterhin vorzugsweise kleiner 36% ist.

2. Zusammensetzung nach Anspruch 1,
   **dadurch gekennzeichnet, dass** die Füllstoffkombination mindestens einen mineralischen, anorganischen Füllstoff enthält, dessen Ölzahl 30-100, vorzugsweise 35-100, weiterhin vorzugsweise 40-100 beträgt.

3. Zusammensetzung nach Anspruch 1 oder 2,
   **dadurch gekennzeichnet, dass** die Füllstoffkombination mindestens einen mineralischen, anorganischen Füllstoff enthält, dessen mittlere Partikelgröße D50 1-30 μm, vorzugsweise 2-25 μm, weiterhin vorzugsweise 3-20 μm, beträgt.

4. Zusammensetzung nach einem der vorhergehenden Ansprüche,
   **dadurch gekennzeichnet, dass** die Füllstoffkombination mindestens einen mineralischen, anorganischen Füllstoff enthält, dessen Ölzahl über 100 liegt und dessen mittlere Partikelgröße D-50 1-30 μm, vorzugsweise 1-20 μm, weiterhin vorzugsweise 2-10 μm beträgt.

5. Zusammensetzung nach einem der vorhergehenden Ansprüche,
   **dadurch gekennzeichnet, dass** die Füllstoffkombination mindestens einen karbonatischen und/oder silikatischen Füllstoff enthält.

6. Zusammensetzung nach einem der vorhergehenden Ansprüche,
   **dadurch gekennzeichnet, dass** die Füllstoffkombination mindestens einen Hartfüllstoff mit einer Mohshärte $\geq 5$, vorzugsweise $\geq 6$, sowie mindestens einen Weichfüllstoff mit einer Mohshärte < 5, vorzugsweise < 4, enthält.

7. Zusammensetzung nach einem der vorhergehenden Ansprüche,
   **dadurch gekennzeichnet, dass** 3-41 Gew.-%, vorzugsweise 3-30 Gew.-%, weiterhin vorzugsweise 4-25 Gew.-% Füllstoffe bezogen auf das Gesamtgewicht der Ausgangsstoffe enthalten sind.

8. Zusammensetzung nach einem der vorhergehenden Ansprüche,
   **dadurch gekennzeichnet, dass** 10-50 Gew.-%, vorzugsweise 15-40 Gew.-%, weiterhin vorzugsweise 20-35 Gew.-% Polymerbindemittel bezogen auf das Gesamtgewicht der Ausgangsstoffe enthalten ist.

9. Zusammensetzung nach einem der vorhergehenden Ansprüche,
   **dadurch gekennzeichnet, dass** das mindestens eine Polymerbindemittel ein Polymerbindemittel auf Basis von Vinylacetat/Ethylen-Copolymeren, Copolymeren auf Basis von Vinylaromaten, insbesondere Styrol, und Acrylaten und/oder Homo- oder Copolymeren auf Basis von Reinacrylaten, insbesondere auf Basis von Styrolacrylatcopolymeren, und/oder Reinacrylate umfassend Homo- oder Copolymere von Acrylaten und/oder Methacrylaten, gegebenenfalls mit Acryl- und/oder Methacrylsäure als Comonomerbaustein, ist.

10. Zusammensetzung nach einem der vorhergehenden Ansprüche,
    **dadurch gekennzeichnet, dass** das mindestens eine Polymerbindemittel eine Polymerdispersion mit einem Feststoffanteil von 30-65 Gew.-%, vorzugsweise 40-60 Gew.-%, weiterhin vorzugsweise 40-55 Gew.-% bezogen auf das Gesamtgewicht der Polymerdispersion ist.

11. Zusammensetzung nach einem der vorhergehenden Ansprüche,

**dadurch gekennzeichnet, dass** Additive enthalten sind, beispielsweise rheologische Additive, Verdicker, Topf- und Filmkonservierungsmittel, Filmbindehilfsmittel, Biozide, Entschäumer und/oder Fasern.

12. Zusammensetzung nach einem der vorhergehenden Ansprüche,
   **dadurch gekennzeichnet, dass**

   10-50 Gew.-% Polymerbindemittel (Feststoffanteil) 1-8 Gew.-% anorganische Füllstoffe mit einer Ölzahl > 100
   2-40 Gew.-% karbonatische und/oder silikatische Füllstoffe mit einer Ölzahl zwischen 30 und 100,
   0-20 Gew.-% weitere Füllstoffe
   1-25 Gew.-% Weiß- und/oder Farbpigmente 0,01-5,0 Gew.-% weitere Additive
   10-50 Gew.-% Wasser

   jeweils bezogen auf das Gesamtgewicht der Ausgangsstoffe enthalten sind.

13. Beschichtung, insbesondere Farbbeschichtung, aus einer Zusammensetzung nach einem der vorhergehenden Ansprüche, wobei die Beschichtung eine Nassabriebfestigkeit der Klasse 1 und/oder einen Glanzgrad < 10 GU, vorzugsweise < 8 GU, weiterhin vorzugsweise $\leq$ 7 GU, aufweist.

Europäisches Patentamt
European Patent Office
Office européen des brevets

**EUROPÄISCHER RECHERCHENBERICHT**

Nummer der Anmeldung

EP 23 16 5580

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2020/094349 A1 (GEBRUEDER DORFNER GMBH & CO KAOLIN UND KRISTALLQUARZSAND WERKE KG [DE]) 14. Mai 2020 (2020-05-14) <br> * Seite 3, Zeile 11 – Zeile 13 * <br> * Abbildungen 1a-1c * <br> * Ansprüche 1-15 * <br> * Seite 1, Zeile 19 – Seite 2, Zeile 3 * <br> * Seite 2, Zeile 33 – Zeile 34 * <br> ----- | 1-13 | INV. <br> C09D5/02 <br> C09D7/61 |
| A | EP 4 049 985 A1 (AMBERGER KAOLINWERKE EDUARD KICK GMBH & CO KG [DE]) 31. August 2022 (2022-08-31) <br> * Absatz [0068]; Beispiel 7 * <br> * Ansprüche 1-15 * <br> ----- | 1-13 | |
| A | WO 2013/025444 A2 (BASF CORP [US]; KHOKHANI ASHOK [US]; FOLMAR KENNETH W [US]) 21. Februar 2013 (2013-02-21) <br> * Seite 13, Zeile 9 – Zeile 20 * <br> * Ansprüche 1-10 * <br> ----- | 1-13 | |
| A | EP 1 715 009 A2 (BENE FIT GMBH [DE]) 25. Oktober 2006 (2006-10-25) <br> * Ansprüche 1-13 * <br> ----- | 1-13 | RECHERCHIERTE SACHGEBIETE (IPC) <br><br> C09D <br> C08K |
| A | EP 1 199 338 A2 (IMERYS KAOLIN INC [US]) 24. April 2002 (2002-04-24) <br> * Absatz [0048] – Absatz [0049]; Beispiel 1 * <br> * Oil Absorption; Absatz [0054]; Tabelle 2 * <br> * Oil Absorption; Absatz [0066] – Absatz [0067]; Tabelle 10 * <br> * Ansprüche 1-57 * <br> ----- | 1-13 | |

Der vorliegende Recherchenbericht wurde für alle Patentansprüche erstellt

| Recherchenort | Abschlußdatum der Recherche | Prüfer |
|---|---|---|
| München | 13. September 2023 | Siemsen, Beatrice |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 23 16 5580

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-09-2023

| Im Recherchenbericht angeführtes Patentdokument | Datum der Veröffentlichung | Mitglied(er) der Patentfamilie | Datum der Veröffentlichung |
|---|---|---|---|
| WO 2020094349 A1 | 14-05-2020 | AU 2019376799 A1 | 27-05-2021 |
| | | CA 3117834 A1 | 14-05-2020 |
| | | EP 3650503 A1 | 13-05-2020 |
| | | US 2020140700 A1 | 07-05-2020 |
| | | WO 2020094349 A1 | 14-05-2020 |
| EP 4049985 A1 | 31-08-2022 | AU 2022201188 A1 | 08-09-2022 |
| | | CA 3149907 A1 | 24-08-2022 |
| | | EP 4049985 A1 | 31-08-2022 |
| | | US 2022389242 A1 | 08-12-2022 |
| WO 2013025444 A2 | 21-02-2013 | AU 2012295392 A1 | 06-03-2014 |
| | | BR 112014003563 A2 | 01-03-2017 |
| | | CN 103890106 A | 25-06-2014 |
| | | EP 2744863 A2 | 25-06-2014 |
| | | ES 2595409 T3 | 29-12-2016 |
| | | JP 6236387 B2 | 22-11-2017 |
| | | JP 2014525978 A | 02-10-2014 |
| | | KR 20140089338 A | 14-07-2014 |
| | | PL 2744863 T3 | 31-01-2017 |
| | | US 2013045384 A1 | 21-02-2013 |
| | | WO 2013025444 A2 | 21-02-2013 |
| EP 1715009 A2 | 25-10-2006 | AT 416237 T | 15-12-2008 |
| | | DE 102005018650 A1 | 26-10-2006 |
| | | DK 1715009 T3 | 06-04-2009 |
| | | EP 1715009 A2 | 25-10-2006 |
| | | ES 2320921 T3 | 29-05-2009 |
| | | PL 1715009 T3 | 30-11-2009 |
| | | SI 1715009 T1 | 30-06-2009 |
| EP 1199338 A2 | 24-04-2002 | AU 784210 B2 | 23-02-2006 |
| | | BR 0106828 A | 04-06-2002 |
| | | EP 1199338 A2 | 24-04-2002 |
| | | US 2002088376 A1 | 11-07-2002 |

EPO FORM P0461

Für nähere Einzelheiten zu diesem Anhang : siehe Amtsblatt des Europäischen Patentamts, Nr.12/82